# EUROPÄISCHE PATENTSCHRIFT

(11) **EP 3 228 676 B1**
(45) Veröffentlichungstag und Bekanntmachung des Hinweises auf die Patenterteilung: **27.02.2019**
(21) Anmeldenummer: 16163655.0
(22) Anmeldetag: 04.04.2016
(51) Int. Cl.: C09J 123/14, C08L 23/22, C08L 53/02, C08L 51/06, B32B 7/12, B32B 13/12, B32B 27/32, B32B 37/12

(54) **SCHMELZKLEBSTOFF MIT VERBESSERTER UV- UND TEMPERATURSTABILITÄT UND VERWENDUNG ZUR HERSTELLUNG EINER MEHRSCHICHTIGEN KUNSTSTOFFBAHN**
HOTMELT ADHESIVE WITH IMPROVED UV AND TEMPERATURE STABILITY AND USE OF SAME FOR MAKING A MULTILAYERED PLASTIC SHEET
COLLE THERMO-FUSIBLE À RÉSISTANCE ANTI-UV ET THERMIQUE RENFORCÉE ET UTILISATION POUR LA FABRICATION D'UNE BANDE DE MATIÈRE SYNTHÉTIQUE MULTICOUCHES

(43) Veröffentlichungstag der Anmeldung: 11.10.2017
(73) Patentinhaber: Sika Technology AG, 6340 Baar (CH)
(72) Erfinder: Janke, Doreen, 25486 Alveslohe (DE); Funke, Björn, 21339 Lüneburg (DE); Günther, Andreas, 21614 Buxtehude (DE)
(74) Vertreter: Sika Patent Attorneys

(56) Entgegenhaltungen:
- EP-A1- 2 826 830
- WO-A1-2011/023768
- WO-A1-2014/163758
- WO-A1-2015/006648

## Beschreibung

### Technisches Gebiet

Die Erfindung betrifft das Gebiet der Schmelzklebstoffe sowie die Verwendung der erfindungsgemäßen Schmelzklebstoff-Zusammensetzung zur Herstellung einer mehrschichtigen Kunststoffbahn. Ferner stellt die vorliegende Erfindung einen Verbundkörper bereit, der die Heissschmelzklebstoff-Zusammensetzung enthält.

### Stand der Technik

Schmelzklebstoffe sind seit langem bekannt und werden als Kaschier- und Montageklebstoffe eingesetzt. Zur Abdichtung von Untergründen gegen Wasserdurchstoss sind in der Baubranche wasserdichte Membranen bekannt.

Beispielsweise beschreibt die WO 2010/ 043 661 A1 eine wasserdichte Membran zur Abdichtung von Untergründen, die eine Schottschicht und eine an einer Seite der Schottschicht angeordnete Verbundschicht umfasst. Die Membran weist zudem ein Dichtmittel auf, das diskontinuierlich zwischen Verbundschicht und Schottschicht angeordnet ist.

Aus der WO 2014/ 029 763 A1 sind wasserdichte Membranen zur Abdichtung von Untergründen bekannt, die eine Schottschicht und eine Funktionsschicht aufweisen. Die Funktionsschicht dieser wasserdichten Membran enthält ein Haftmittel und ein thermoplastisches Polymer, dessen Konsistenz sich bei Kontakt mit einem stark alkalischen Medium ändert. Das thermoplastische Polymer gewährleistet somit, dass die Funktionsschicht einer Verarbeitung durch Angiessen von flüssigem Beton nicht klebrig ist, aber bei Kontakt mit Beton klebrig wird, so dass sich ein fester Verbund mit dem angegossenen Beton ausbilden kann.

Häufig weisen wasserdichte Membranen zur Abdichtung von Gebäuden gegen Wassereintritt eine Beschichtung mit einem Schmelzklebstoff auf, der als Kaschierklebstoff den Verbund einer Schottschicht mit einer Funktionsschicht, wie einem Vlies, in das flüssiger Beton eindringen kann, oder direkt mit dem aufgetragenen Beton, gewährleistet. Solche Schmelzklebstoffe müssen ein spezifisches Eigenschaftsprofil aufweisen. Um einen optimalen Schutz des Betons vor Feuchtigkeit und Wasser aus dem Untergrund auch nach einer eventuellen Beschädigung der wasserdichten Membran zu gewährleisten (Hinterlaufsicherheit), muss der Schmelzklebstoff im erkalteten Zustand eine hohe Haftfestigkeit zur Schottschicht und zur Funktionsschicht aufweisen. Da die Schottschicht meist aus Materialien mit geringer Oberflächenenergie besteht, muss der Klebstoff auf Materialien wie Polyolefinen, insbesondere Polyethylen oder Ethylenvinylacetat-Copolymeren, einen guten Haftungsaufbau zeigen.

Der Klebstoff sollte außerdem auch nach dem Aushärten eine ausreichende Eigenklebrigkeit aufweisen und möglichst weich sein. Da der Klebstoff mit flüssigem Beton in Kontakt kommt, sollte er zudem eine hohe Hydrolyse-Stabilität zeigen. Schließlich sollte der Schmelzklebstoff über eine hinlängliche Anfangsklebrigkeit vor dem Aushärten verfügen, damit bei der industriellen Fertigung von wasserdichten Membranen aus einer Schottschicht und einer Funktionsschicht die beiden Schichten verbunden werden können.

Mit diesem Problem befasst sich die WO 2011/ 023 768 A1, die Schmelzklebstoffe auf Basis von bei 25 °C festen Polyolefinen, Weichharzen mit einem Erweichungspunkt zwischen -10 °C und 40 °C und polar modifizierten Polyolefin-Wachsen beschreibt. Diese Schmelzklebstoffe zeigen gute Haftungs- und Frühfestigkeitseigenschaften auf Polyolefin-Substraten.

Um hierbei die Hinterlaufsicherheit gewährleisten zu können, ist ein tiefes Einpenetrieren des Schmelzklebstoffs vor seiner Aushärtung in die Funktionsschicht erforderlich. Idealerweise penetriert der Beton, nach Applikation auf die Funktionsschicht, bis auf den Schmelzklebstoff durch und bindet so am Schmelzklebstoff an, wodurch eine hohe Hinterlaufsicherheit gegeben ist.

Die bisher aus dem Stand der Technik bekannten Schmelzklebstoff-Zusammensetzungen zur Verwendung mit Substraten mit geringer Oberflächenenergie weisen allerdings den Nachteil einer nur unzureichenden UV-Beständigkeit auf. Dies stellt insbesondere bei größeren Bauprojekten oder Bauprojekten in Staaten, in denen die Membranen intensivem Sonnenlicht ausgesetzt werden, ein großes Problem dar, da die mit dem Schmelzklebstoff beschichteten Membranen mittunter bis zu einige Wochen gegenüber dem Tageslicht exponiert werden. Das UV-Licht führt zu einer Versprödung des Klebstoffs, was zu einer Ablösung von auf einer Schottschicht aufgebrachten Vliesschichten führt. Dies hat wiederum zur Folge, dass sich unter die Schottschicht eindringendes Wasser, abhängig vom Ausmaß der Ablösung, großflächig verteilen kann, so dass sich eine undichte Stelle in der Membran nur noch schwer lokalisieren lässt. Damit weisen die bekannten Membranen keine ausreichende Hinterlaufsicherheit auf.

Die US 3,868,443 beschreibt thermoplastische Klebstoff-Zusammensetzungen auf Basis von Mischungen von 5 bis 95 Gew.-% einer konventionellen thermoplastischen Basiskomponente für Schmelzklebstoffe in Form eines Polyolefins und 95 bis 5 Gew.-% eines C₂ bis C₈ Polyolefin-polymers, dass mit 0,1 bis 50 Gew.-% eines Carbonsäuremonomers oder eines Derivats davon gepfropft wurde. Durch die Modifikation mit der Säure sollen sich die Adhäsionseigenschaften an Metalloberflächen und die Temperaturbeständigkeit der Klebeverbindung verbessern.

Die EP 2 172 529 A1 beschreibt Schmelzklebstoffzusammensetzungen, die in alkalischen Medien dispergierbar sein sollen und auf Mischungen von thermoplastischen Elastomeren, Harzklebrigmachern mit einer Säure-Zahl im Bereich von 100 bis 300 mgKOH/g, Terpen-Phenol-Harzen und/oder Polybutylen, synthetischem Öl, und einem mit Maleinsäure-gepfropftem Polyethylen Wachs beruhen. Die beschriebenen Klebstoffe sollen sich durch eine verbesserte Abziehbarkeit von Substraten wie Glas- oder PET-Flaschen auszeichnen, und abgezogen werden können, ohne dass Klebstoffrückstände auf dem Substrat verbleiben.

Eine Weiterentwicklung der in der WO 2011/ 023 768 A1 beschriebenen Lehre stellen Schmelzklebstoffe dar, in denen das Weichharz durch ein bei 25°C flüssiges Polyolefinharz ersetzt wurde, um eine verbesserte UV-Stabilität zu erreichen. Durch diese Modifikation lässt sich die UV-Beständigkeit signifikant steigern, ein Nachteil dieser weiterentwickelten Zusammensetzungen besteht jedoch darin, dass insbesondere bei hohen Temperaturen, wie sie in den sogenannten "HotClimate"-Regionen auftreten ein ausgeprägtes Erweichen des Klebstoffs zu beobachten ist.

### Darstellung der Erfindung

Aufgabe der vorliegenden Erfindung ist es daher, Schmelzklebstoff-Zusammensetzungen zur Verfügung zu stellen, die ein möglichst breites Haftungsspektrum aufweisen, auf niederenergetischen Oberflächen gut haften und sich zudem durch eine hohe UV-Stabilität auszeichnen. Darüber hinaus sollten die Schmelzklebstoff-Zusammensetzungen bei Temperaturen, wie sie in den "HotClimate"-Regionen auftreten, weniger stark erweichen, so dass die Integrität und Funktionsweise der Membran vor einem Betonieren auch nach längerer UV- und Temperatur-Exposition gewährleitet ist.

Überraschenderweise hat sich gezeigt, dass eine Schmelzklebstoff-Zusammensetzung gemäss Anspruch 1 in der Lage ist, dieses Problem zu lösen. Die Schmelzklebstoff-Zusammensetzungen gemäß der vorliegenden Erfindung verfügen über ein breites Haftspektrum, zeichnen sich durch eine hohe Haftfestigkeit gegenüber Folien mit niedriger Oberflächenenergie wie Polyolefin-Folien, insbesondere Polyethylen-Folien, aus und zeigen eine sehr gute UV-Beständigkeit über längere Zeiträume und ein verbessertes Erweichungsprofil.

Ferner ist die erfindungsgemäße Schmelzklebstoff-Zusammensetzung lagerstabil und unter den üblichen Applikationsbedingungen, insbesondere im Temperaturbereich von 150 bis 200 °C, gut verarbeitbar und während einer ausreichend langen Zeit viskositätsstabil. Die Schmelzklebstoff-Zusammensetzung weist darüber hinaus eine geeignete Eigenklebrigkeit sowie eine gute Beständigkeit gegenüber Umwelteinflüssen allgemein auf.

Weiter sind die Schmelzklebstoff-Zusammensetzungen aus arbeitshygienischen und -sicherheitsbedingten Aspekten sehr vorteilhaft.

Weitere Aspekte der vorliegenden Erfindung betreffen die Verwendung der Schmelzklebstoff-Zusammensetzung zur Herstellung von mehrschichtigen Kunststoffbahnen und zum Verkleben von Polyolefin-Materialien mit Schäumen, Faserwerkstoffen oder Folien.

Ferner betrifft die vorliegende Erfindung einen Verbundkörper gemäss Anspruch 13.

Bevorzugte Ausführungsformen der Erfindung sind Gegenstand der Unteransprüche.

### Wege zur Ausführung der Erfindung

In einem ersten Aspekt betrifft die vorliegende Erfindung eine Schmelzklebstoff-Zusammensetzung, welche
a) mindestens ein bei 25 °C festes Polyolefin-Polymer **P,**
b) mindestens ein bei 25 °C flüssiges Polyolefin-Harz **PH,** bevorzugt Polyisobutylen,
c) gegebenenfalls mindestens ein Polyolefin-Wachs **PW,** und
d) mindestens ein bei 25 °C festes Styrol-Blockcopolymer **B,** umfasst, wobei das Polyolefin-Polymer P ein thermoplastisches Poly-alpha-Olefin ist.

Als "Erweichungspunkt" wird im vorliegenden Dokument jeweils der Erweichungspunkt, welcher nach der Ring & Kugel-Methode gemäss DIN EN 1238 gemessen wurde, verstanden.

Als "Raumtemperatur" wird im vorliegenden Dokument eine Temperatur von 25 °C bezeichnet.

Die fett markierten Bezeichnungen wie **P, PH, PW, B, S1, S2** und dergleichen dienen im vorliegenden Dokument lediglich dem besseren Leseverständnis und der Identifizierung.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter einem "α-Olefin" wird in diesem Dokument in üblicher Definition ein Alken der Summenformel CₓH₂ₓ (x entspricht der Anzahl Kohlenstoffatome) verstanden, welches eine C-C-Doppelbindung am ersten Kohlenstoffatom (α-Kohlenstoff) aufweist. Beispiele für α-Olefine sind Ethylen, Propylen, 1-Buten, 1-Penten, 1-Hexen, 1-Hepten und 1-Octen, während 1,3-Butadien, 2-Buten oder Styrol keine α-Olefine im Sinne dieses Dokumentes darstellen.

Bei dem Polyolefin-Polymer **P** in der erfindungsgemäßen Zusammensetzung handelt es sich um ein thermoplastisches Poly-α-olefin, und bevorzugt um ein ataktisches Poly-α-olefin (APAO) und besonders bevorzugt um ein Propen-reiches Poly-α-olefin. Ataktischen Poly-α-olefine lassen sich durch Polymerisation von α-Olefinen, insbesondere von Ethen, Propen und 1-Buten, beispielsweise mit Ziegler-Natta-Katalysatoren herstellen und weisen gegenüber anderen Polyolefinen eine amorphe Struktur auf. Bei diesen Poly-α-olefinen kann es sich um Homopolymere oder Copolymere handeln.

Das Polyolefin-Polymer ist im Rahmen der vorliegenden Erfindung insbesondere ein Polymer, das ausschließlich Wiederholungseinheiten in Form von α-Olefinen aufweist. Von dieser Vorgabe nicht erfasst sind somit Co- der Propf-Copolymere mit Monomeren, die nicht unter den Oberbegriff "α-Olefin" fallen. Hierzu zählen insbesondere (Meth)acrylat-ester sowie die freie (Meth)acryl-säure, andere ungesättigte Carbon- oder Dicarbonsäuren oder Anhydride davon und Vinylester.

Durch die Angabe "mindestens bei 25 °C festes Polyolefin-Polymer **P**" sind auch Gemische von mehreren bei 25 °C festen Polyolefin-Polymeren erfasst, wobei es sich um Mischungen von Polyolefin-Polymeren des gleichen Polymertyps (d.h. z.B. verschiedene Polypropylene), oder von unterschiedlichen Polymertypen handeln kann. Bevorzugt Gemische von bei 25 °C festen Polyolefin-Polymeren **P** umfassen Mischungen verschiedener ataktischer Poly-α-olefine und Mischungen von einem ataktischen Poly-α-olefin mit Polypropylen und/oder Polyethylen.

Ein im Rahmen der vorliegenden Erfindung besonders bevorzugtes Polyolefin-Polymer **P** ist ein nach dem Ziegler-Natta-Verfahren hergestelltes Propen-reiches ataktischen Poly-α-olefin, wie es z. B. unter dem Handelsnamen Vestoplast® 751 von Evonik erhältlich ist.

Eine weitere Klassen von Polyolefin-Polymeren, die zweckmäßig als Polyolefin-Polymer **P** in die erfindungsgemäßen Schmelzklebstoff-zusammensetzungen einbezogen werden können sind Silan-gepfropfte Polypropylen- oder Polyethylen-Polymere.

Bevorzugt weisen diese Silan-gepfropften Polypropylen- oder Polyethylen-Polymere eine Erweichungstemperatur von 70°C bis 150°C, insbesondere von 80°C bis 120°C, und besonders bevorzugt von 90°C bis 110°C, auf. Die Erweichungstemperatur wird hierbei mit der Ring & Kugel-Methode in Anlehnung an die DIN EN 1427 gemessen.

Derartige Silan-gepfropfte Polypropylen- oder Polyethylen-Polymere sind dem Fachmann ohne Weiteres geläufig. Sie lassen sich beispielsweise durch Aufpfropfung von ungesättigtem Silan, wie Vinyltrimethoxysilan, auf ein Polyethylen oder Polypropylen herstellen. Eine detaillierte Beschreibung zur Herstellung von Silan-gepfropften Polypropylen- oder Polyethylen-Polymeren findet sich beispielsweise in der US 5,994,474 und der DE 40 00 695 A1.

Besonders geeignet als Silan-gepfropfte Polypropylen- oder Polyethylen-Polymere werden mittels Ziegler-Natta-Katalysatoren hergestellt, und anschließend durch Aufpfropfung von Silangruppen modifiziert. Insbesondere handelt es sich um silangepfropfte Polyethylen-Homopolymere oder Polypropylen-Homopolymere.

Der Pfropfungsgrad der Silan-gepfropften Polypropylen- oder Polyethylen-Polymere beträgt vorteilhafterweise mehr als 1 Gew.-%, insbesondere mehr als 3 Gew.-%, Silan, bezogen auf das Gewicht des Polypropylens oder Polyethylens. Wird als Silan-gepfropftes Polypropylen- oder Polyethylen-Polymer ein nach dem Ziegler-Natta-Verfahren hergestelltes silangepfropftes Polypropylen- oder Polyethylen-Polymer verwendet, so liegt der Pfropfungsgrad vorzugsweise zwischen 1 und 8 Gew.-%, insbesondere zwischen 1,5 und 5 Gew.-%. Wenn für das Silangepfropftes Polypropylen- oder Polyethylen-Polymer über Metallocen-Katalysatoren hergestellte Polypropylene oder Polyethylene verwendet werden, liegt der Propfungsgrad hingegen vorzugsweise zwischen 8 und 12 Gew.-%.

Bevorzugt weist das Polyolefin-Polymer **P** einen Erweichungspunkt, gemessen nach der Ring & Kugel-Methode gemäss DIN EN 1238, zwischen 70 °C und 170 °C, bevorzugt zwischen 80 °C und 120 °C, besonders bevorzugt zwischen 90 °C und 110 °C, auf.

Weiterhin ist es bevorzugt, wenn das Molekulargewicht Mₙ des Polyolefin-Polymers **P** zwischen 7000 und 25000 g/mol liegt.

Unter "Molekulargewicht" versteht man im vorliegenden Dokument stets das zahlenmittlere Molekulargewichts Mₙ, das mit Hilfe der Gaspermeationschromatopraphie (GPC) und geeigneten Polystyrolstandards in Anlehnung an die DIN 55672 bestimmt werden kann.

In Bezug auf den Anteil des Polyolefin-Polymers **P** in der erfindungsgemäßen Schmelzklebstoff-Zusammensetzung unterliegt die vorliegende Erfindung keinen wesentlichen Beschränkungen. Als günstiger Anteil hat sich in der vorliegenden Erfindung aber eine Menge des mindestens einen bei 25 °C festen Polyolefin-Polymers **P** im Bereich von 10 bis 60 Gew.-%, bevorzugt von 25 bis 55 Gew.-% und besonders bevorzugt von 30 bis 50 Gew.-%, bezogen auf das Gesamtgewicht der Schmelzklebstoff-Zusammensetzung, herausgestellt.

Die Schmelzklebstoff-Zusammensetzung enthält weiterhin mindestens ein bei 25 °C flüssiges Polyolefin-Harz **PH.** Unter "Polyolefin-Harzen" werden im Rahmen der vorliegenden Erfindung Polyolefin-Materialien verstanden, die bei 25 °C klebrig und nicht-kristallin sind und die Polymere von Monomeren der allgemeinen Struktur CH₂=CR₁R₂ bilden, in denen R₁ einen Alkylrest darstellt und R₂ entweder ebenfalls einen Alkylrest darstellt, der von R₁ verschieden sein kann, oder ein Wasserstoffatom ist. Geeignete Polyolefin-Harze zur Verwendung in den erfindungsgemäßen Schmelzklebstoff-Zusammensetzungen sind damit vor allem ataktische Polypropylene oder Polyisobutylene, wobei Polyisobutylene als bevorzugt gelten. Für die verwendbaren Polyisobutylene ist es unwesentlich, ob diese einen Anteil an terminalen Doppelbindungen aufweisen oder ob solche Doppelbindungen durch Umsetzung mit Wasserstoff aus dem Polymer entfernt wurden.

Das Polyolefin-Harz weist, soweit bestimmbar, vorzugsweise einen Erweichungspunkt (bestimmt nach der Ring & Kugel-Methode gemäß DIN EN 1238) von weniger als -10°C auf.

Das Polyolefin-Harz weist zudem bevorzugt ein zahlenmittleres Molekulargewicht Mₙ im Bereich 250 bis 5000 g/mol und insbesondere im Bereich von 500 bis 2500 g/mol auf. Geeignete Polyolefin-Harze weisen zudem zweckmäßig einen "pour point" (bestimmt gemäß DIN 51597) im Bereich von -10 bis +10°C und insbesondere von -10 bis +5°C auf. Solche Polyolefin-Harze sind z. B. unter den Handelsnamen Glissopal V230, V500 oder V700 von der Firma BASF, Dynapak Poly 230 von der Firma Univar GmbH (Essen, Deutschland), DAELIM PB 950 von der Firma Daelim Industrial Co., Ltd, oder als Indopol H100 von der Firma Ineos erhältlich.

Auch in Bezug auf die Menge des mindestens einen Polyolefin-Harzes **PH** unterliegt die vorliegende Erfindung keinen substanziellen Beschränkungen. Im Rahmen der durchgeführten Untersuchungen hat sich jedoch gezeigt, dass ein Unterschreiten eines Gehalts von 20 Gew.-% zu einer nur noch geringen Eigenklebrigkeit der Schmelzklebstoff-Zusammensetzung führt. Bevorzugt beträgt daher der Gehalt des mindestens einen Polyolefin-Harzes **PH** mindestens 20 Gew.-%, wobei als besonders günstige Gehaltsbereiche25 bis 45 Gew.-% und insbesondere 30 bis 40 Gew.-%, bezogen auf das Gesamtgewicht der Schmelzklebstoff-Zusammensetzung, angegeben werden können.

Die Schmelzklebstoff-Zusammensetzung enthält gegebenenfalls weiterhin mindestens ein Polyolefin-Wachs **PW**. Unter einem "Polyolefin-Wachs" versteht man, im Gegensatz zu einem Polyolefin-Harz, ein Material aus einem Polyolefin, das bei Temperaturen von weniger als 40 °C fest ist, und im festen Zustand eine teilkristalline Struktur aufweist. Zudem sei für die Definition von Wachsen auf das Römpp Chemie Lexikon, 10. Auflage, 1999 verwiesen, in dem weitere Eigenschaften von Wachsen angegeben werden. Polyolefin-Wachse weisen diese Eigenschaften auf und bestehen in der Basis aus Polyolefinen, die allerdings mit anderen Monomeren funktionalisiert sein können.

Im Rahmen der vorliegenden Erfindung geeignete Polyolefin-Wachse **PW** sind zum Beispiel durch Aufpfropfung von polaren Olefin-Monomeren, beispielsweise α,β-ungesättigten Carbonsäuren und/oder deren Derivaten, wie (Meth-)acrylsäure oder Maleinsäureanhydrid, und/oder substituierte und/oder unsubstituierte Styrole erhältlich.

Zudem können geeignete Polyolefin-Wachse **PW** durch thermischen Abbau verzweigter oder unverzweigter Polyolefin-Kunststoffe oder durch direkte Polymerisation von Olefinen hergestellt werden. Als Polymerisationsverfahren kommen beispielsweise radikalische Verfahren in Betracht, bei denen die Olefine, in der Regel Ethylen, bei hohen Drücken und Temperaturen zu mehr oder minder verzweigten Wachsen umgesetzt werden. Bei anderen Verfahren zur Herstellung geeigneter Polyolefin-Wachse werden Ethylen und/oder höhere α-Olefine mit Hilfe metallorganischer Katalysatoren, beispielsweise Ziegler-Natta- oder Metallocenkatalysatoren, zu unverzweigten oder verzweigten Wachsen polymerisiert.

Bevorzugt handelt es sich bei dem Polyolefin-Wachs **PW** um Homo- und Copolymere verschiedener Alkene, insbesondere um Homo- und Copolymere des Ethens und Propens.

Darüber hinaus handelt es sich bei dem Polyolefin-Wachs **PW** bevorzugt um Homo- und Copolymere, die mit Hilfe von Ziegler-Natta- oder Metallocen-Katalysatoren hergestellt werden.

Besonders bevorzugt handelt es sich in der erfindungsgemäßen Zusammensetzung bei dem mindestens einen Polyolefin-Wachs **PW** um ein Maleinsäureanhydrid-gepfropftes Polyolefin-Wachs und ganz besonders bevorzugt um ein Maleinsäureanhydrid-gepfropftes Polypropylen- oder Polyethylen-Wachs.

Der Pfropfungsgrad des Polyolefin-Wachs **PW** ist vorteilhaft über 1 Gew.-%, insbesondere über 3 Gew.-%, polarer Olefin-Monomere, insbesondere Maleinsäureanhydrid, bezogen auf das Gewicht des Polyolefin-Wachs **PW**. Vorzugsweise beträgt dieser Pfropfungsgrad zwischen 2 und 15 Gew.-%, bevorzugt zwischen 4 und 15 Gew.-% und besonders bevorzugt zwischen 6 und 12 Gew.-%.

Falls die erfindungsgemäßen Schmelzklebstoff-Zusammensetzung ein Polyolefin-Wachs **PW** enthält, sollte dieses mit einem Anteil von mindestens 0,5 Gew.-% in der Schmelzklebstoff-Zusammensetzung enthalten sein. Bevorzugt beträgt die Menge des mindestens einen Polyolefin-Wachses **PW** mehr als 1 Gew.-%, besonders bevorzugt 1 bis 20 Gew.-%, ganz besonders bevorzugt 3 bis 15 Gew.-% und am meisten bevorzugt etwa 5 bis 10 Gew.-%, bezogen auf die Schmelzklebstoff-Zusammensetzung. Abhängig von den weiteren Bestandteilen der Zusammensetzung und deren Gehalten kann jedoch auch ein Anteil von 3 bis 5 Gew.-% ausreichend sein.

Das Polyolefin-Wachs **PW** weist vorzugsweise einen Erweichungspunkt zwischen 75 °C und 200 °C, insbesondere zwischen 120 °C und 170 °C, und/oder eine Schmelzviskosität bei 170 °C von 10 - 10 000 mPa•s, insbesondere von 750 - 5000 mPa•s, auf.

Über die im Vorstehenden erläuterten Bestandteile hinaus kann die erfindungsgemäße Schmelzklebstoff-Zusammensetzung mindestens ein thermoplastisches Polymer enthalten, das kein Polyolefin-Polymer ist. Bevorzugte thermoplastische Polymere sind beispielsweise Co-Polymere von Monomeren wie Ethylen, Propylen, Butylen oder Isobutylen mit Isopren, Vinylestern, insbesondere Vinylacetat, und (Meth)acrylaten. Ebenfalls bevorzugt sind thermoplastische Homopolymere von Vinylestern und (Meth)acrylaten sowie (Meth)acrylat-copolymere.

Besonders bevorzugte thermoplastische Polymere sind Homo- und Co-Polymere wie Ethylenvinylacetat-Copolymere (EVA), insbesondere mit einem Vinylacetat-Gehalt im Bereich von 10 bis 35 Gew.-%, einem Schmelzindex (bestimmt gemäß ASTM D1238 bei 190°C und 2.16 kg) von 5 bis 1000 g/10Min und einem Schmelzpunkt im Bereich von 60 bis 100°C, sowie Polypropylene und Polyethylene in gepfropfter bzw. nicht gepfropfter Form. Besonders geeignte Ethylenvinylacetat-Copolymere sind unter den Handelsnamen Evathane® 28-800 von Arkema oder Greenflex® MP35 von Polimeri erhältlich.

Optional kann die erfindungsgemäße Schmelzklebstoff-Zusammensetzung auch ein oder mehrere Öle, die zweckmäßig auf Polyolefinen beruhen, enthalten, wobei ein solcher Zusatz aber weniger bevorzugt ist.
Optional kann die erfindungsgemäße Schmelzklebstoff-Zusammensetzung zudem einen Klebrigkeitverbesserer auf Basis eines Harzes enthalten, bei dem es sich nicht um ein Polyolefinharz handelt wie es vorstehend definiert wurde. Diesbezüglich in Betracht kommen insbesondere aliphatische und cycloaliphatische oder aromatische Kohlenwasserstoffharze, die durch Polymerisation bestimmter Harzölfraktionen hergestellt werden können, die bei der Aufbereitung von Erdöl anfallen. Derartige Harze, die z.B. durch Hydrierung oder Funktionalisierung modifiziert werden können, sind beispielsweise unter den Handelsnamen Wing Tack (Cray Valley), z. B. in Form von Wingtack 86, oder Escorez (ExxonMobil Chemical Company), z.B. in Form von Escorez 1401, erhältlich. Weiter kommen als Harze PolyterpenHarze in Betracht, hergestellt durch Polymerisation von Terpenen, beispielsweise Pinen in Gegenwart von Friedel-Crafts-Katalysatoren, desgleichen hydrierte Polyterpene, Copolymere und Terpolymere von natürlichen Terpenen, beispielsweise Styrol/Terpen- oder α-Methylstyrol/Terpen-Copolymere. Weiter in Betracht kommen natürliche und modifizierte Kolophoniumharze, insbesondere Harzester, Glycerinester von Baumharzen, Pentaerithrolester von Baumharzen und Tallölharzen und deren hydrierte Derivate sowie phenol-modifizierte Pentaerithrolester von Harzen und phenol-modifizierte Terpen-Harze.

Im Rahmen der dieser Erfindung zugrundeliegenden Untersuchungen hat es sich gezeigt, dass Zusammensetzungen, die Weichharze mit einem Erweichungspunkt von -10 °C bis 40 °C (bestimmt nach der Ring & Kugel-Methode gemäß DIN EN 1238), und insbesondere Weichharze auf Basis von C₅-C₉-Kohlenwasserstoffen, enthalten, eine verminderte UV-Stabilität aufweisen. Im Rahmen der hier beschriebenen Erfindung ist es deshalb bevorzugt, wenn die Schmelzklebstoff-Zusammensetzungen ohne den Zusatz solcher Weichharze hergestellt werden, und demzufolge frei von solchen Weichharzen sind.

Als dritten erforderlichen Bestandteil enthält die erfindungsgemäße Schmelzklebstoff-Zusammensetzung mindestens ein bei 25 °C festes Styrol-Blockcopolymer **B.** Bevorzugt als Styrol-Blockcopolymere B sind insbesondere Blockcopolymere des Typs SXS, bei denen S einen Styrolblock und X einen elastischen α-Olefinblock bezeichnet. Der elastische α-Olefinblock weist bevorzugt eine Glasübergangstemperatur im Bereich von -55 °C bis -35 °C auf. Als α-Olefinblock eignen sich insbesondere gemischte Ethylen/Butylen (EB) Blöcke, die zum Beispiel durch Hydrierung von Butadienblöcken hergestellt werden können.

Bei dem α-Olefinblock kann es sich auch um einen chemisch modifizierten α-Olefinblock handeln. Besonders geeignete chemisch modifizierte α-Olefinblöcke sind z.B. Maleinsäure-gepfropfte α-Olefinblöcke und insbesondere Maleinsäure-gepfropfte Ethylen/Butylen (EB) Blöcke.

Während Styrol-Blockcopolymere SXS auf Basis von gesättigten Mittelblöcken X in Rahmen der vorliegenden Erfindung bevorzugt sind, sind Styrol-Blockcopolymere, die ungesättigte Doppelbindungen aufweisen, aufgrund ihrer geringen Beständigkeit gegenüber UV-Licht nicht bevorzugt. Derartige Styrol-Blockcopolymere sind daher vorzugsweise nicht in den erfindungsgemäßen Schmelzklebstoff-Zusammensetzungen enthalten. Als ungesättigte Doppelbindungen gelten keine aromatischen Doppelbindungen. Der Anteil der Styrolblöcke in dem Styrol-Blockcopolymer sollte so bemessen sein, das Styrol im Vergleich zu weiteren Bestandteilen der Styrol-Blockcopolymere im Unterschuss vorliegt. Als besonders geeignet kann ein Styrolgehalt im Bereich von 10 bis 35 Gew.-%, bezogen auf das Gesamtgewicht des Styrol-Blockcopolymers, angegeben werden. Besonders bevorzugt ist ein Gehalt im Bereich von 13 bis 30 Gew.-%. Alternativ kann es bevorzugt sein, wenn das Styrol-Blockcopolymer einen niedrigen Styrolgehalt aufweist. Für diesen Fall kann ein Gehalt im Bereich von 10 bis 20 Gew.-% und insbesondere 12 bis 15 Gew.-% als besonders bevorzugt angegeben werden.

Für das bei 25 °C feste Styrol-Blockcopolymer ist es von Vorteil, wenn es einen Schmelzflussindex, bestimmt bei 230°C bei 2,16 kg, von mindestens 100 g/10min, insbesondere im Bereich von etwa 150 g/10min bis 300 g/10 Min und besonders bevorzugt im Bereich von etwa 190 g/10min bis 250 g/10 Min aufweist.

Als kommerzielle Produkte, die sich für die Verwendung im Rahmen der vorliegenden Erfindung als besonders zweckmäßig erwiesen haben, sind z.B. Kraton G 1652, Kraton G 1657, Kraton G 1726, Kraton MD 1648 und Kraton FG 1901 von Kraton Performance Polymers zu nennen. Ein besonders geeignetes kommerzielles Produkt ist Kraton MD 1648.

Die Menge der in die erfindungsgemäßen Schmelzklebstoff-Zusammensetzungen einzubeziehenden Styrol-Blockcopolymere unterliegt keinen wesentlichen Beschränkungen mit der Maßgabe, dass es möglich sein muss, die Styrol-Blockcopolymere in die Schmelzklebstoff-Zusammensetzung einzuarbeiten, ohne dass die thermische Belastung für die weiteren Komponenten der Zusammensetzung zu groß wird. Da für das Einarbeiten der Styrol-Blockcopolymere erhöhte Temperaturen von etwa 190°C erforderlich sein können, sind die weiteren Bestandteile und insbesondere organische Wärme- oder UV-Stabilisatoren zweckmäßig so auszuwählen, dass sie sich, wenn sie einer solche Temperatur für zumindest einen kurzen Zeitraum ausgesetzt sind, nicht in wesentlichem Umfang zersetzen. Als geeigneter Anteil für bei 25°C feste Styrol-Blockcopolymere kann ein Bereich von 15 bis 35 Gew.-% und insbesondere 20 bis 30 Gew.-%, bezogen auf die Schmelzklebstoffzusammensetzung, angegeben werden. In Einzelfällen kann auch ein Anteil von 15 bis 20 Gew.-%, bezogen auf die Schmelzklebstoff-zusammensetzung ausreichend sein, um die gewünschten Applikationseigenschaften einzustellen.

Die Schmelzklebstoff-Zusammensetzung kann weiterhin zusätzlich Additive enthalten, die aus der Gruppe bestehend aus Füllstoffen, Weichmachern, Haftvermittlern, UV-Absorptionsmitteln, UV- und Wärmestabilisatoren, optischen Aufhellern, Pigmenten, Farbstoffen und Trocknungsmitteln, sowie Mischungen davon ausgewählt sind.

Geeignete Wärmestabilisatoren sind sterisch gehinderte Phenole wie sie unter anderem unter dem Handelsnamen Irganox® 1010 von BASF vertreiben werden.

Geeignete UV-Absorptionsmittel und UV-Stabilisatoren sind z.B. die unter der Bezeichnung HALS (hindered amine light stabilizer) bekannten Materialien. Geeignete HALS-Stabilisatoren werden beispielsweise unter den Handelsbezeichnungen Chimassorb® 2020 oder Chimassorb® 944 von BASF vertrieben. Weitere geeignete UV-Stabilisatoren sind die unter den Handelsnamen Tinuvin® 622, Tinuvin® 783 von BASF und Tinuvin® 326 von Ciba vertriebenen Produkte. Als besonders geeignet als UV-Absorptionsmittel und UV-Stabilisator hat sich eine Mischung von Chimassorb® 2020, Tinuvin® 783, Tinuvin® 326 und Irganox® 1010 im Verhältnis (1/1/1/0,25) herausgestellt.

Die Gesamtmenge an zweckmäßig in die erfindungsgemäße Schmelzklebstoff-Zusammensetzung einzubeziehenden Wärme- und UV-Stabilisatoren kann mit 0,1 bis 7 Gew.-%, insbesondere 0,5 bis 5 Gew.-% und bevorzugt 2 bis 4 Gew.-% angegeben werden. Übersteigt die Menge einen Anteil von 7 Gew.-%, werden die mechanischen Eigenschaften des Schmelzklebstoffs beeinträchtigt, ohne dass die weiter verbesserten UV-Beständigkeitseigenschaften in den meisten Applikationen einen zusätzlichen Nutzen bringen. Ist der Zusatz der Stabilisatoren hingegen geringer als 0,1 Gew.-%, ist der vermittelte UV- und Wärme-stabilisierende Effekt nur schwach ausgeprägt.

Ein im Rahmen der vorliegenden Erfindung geeignetes Pigment ist insbesondere Titandioxid (TiO₂). Pigmente und insbesondere Titandioxid werden zweckmäßig in einer Menge von 2 bis 10 Gew.-%, insbesondere 3 bis 8 Gew.-% und bevorzugt 4 bis 7 Gew.-% in die erfindungsgemäße Schmelzklebstoff-Zusammensetzung einbezogen.

Es hat sich gezeigt, dass es besonders vorteilhaft ist, wenn die Gewichtssumme aller bei 25 °C festen Polyolefin-Polymere **P,** aller bei 25 °C flüssigen Polyolefin-Harze **PH,** aller Polyolefin-Wachse **PW** und aller bei 25°C festen Styrol-Blockcopolymeren **B** mehr als 60 Gew.-%, bevorzugt mehr als 80 Gew.-%, der Schmelzklebstoff-Zusammensetzung ausmacht.

Als besonders vorteilhaft haben sich zudem Schmelzklebstoff-Zusammensetzungen erwiesen, welche im Wesentlichen aus bei 25 °C festen Polyolefin-Polymeren **P,** bei 25 °C flüssigen Polyolefin-Harzen **PH,** gegebenenfalls Polyolefin-Wachs **PW** und bei 25 °C festen Styrol-Blockcopolymeren, sowie gegebenenfalls zusätzlichen UV-Stabilisatoren bestehen, wobei die Verwendung von jeweils einem Polyolefin-Polymer **P,** einem Polyolefin-Harz **PH,** gegebenenfalls einem Polyolefin-Wachs **PW** und einem bei 25 °C festen Styrol-Blockcopolymer aus prozessökonomischen Gründen bevorzugt ist. Der Begriff "im Wesentlichen bestehen aus" bedeutet, dass weniger als 5 Gew.-%, insbesondere weniger als 1 Gew.-%, Anteile an anderen Bestandteilen vorhanden sind.

Insbesondere bestehen die Schmelzklebstoff-Zusammensetzungen aus mindestens einem bei 25 °C festem Polyolefin-Polymer **P,** mindestens einem bei 25 °C flüssigem Polyolefin-Harz **PH,** gegebenenfalls mindestens einem Polyolefin-Wachs **PW,** mindestens einem bei 25 °C festen Styrol-Blockcopolymer und gegebenenfalls zusätzlichen UV-Stabilisatoren.

Grundsätzlich erfolgt die Herstellung auf übliche, dem Fachmann für Schmelzklebstoffe bekannte, Art und Weise.

Die Schmelzklebstoff-Zusammensetzungen werden durch Aufheizen verflüssigt, wobei die thermoplastischen Inhaltsstoffe aufschmelzen. Die Viskosität der Schmelzklebstoff-Zusammensetzungen sollte an die Applikationstemperatur angepasst sein. Typischerweise ist die Applikationstemperatur 150 bis 200 °C, insbesondere 155 bis 180 °C. Bei dieser Temperatur ist der Klebstoff gut verarbeitbar. Die Viskosität, bestimmt nach Brookfield Thermosel, beträgt vorzugsweise in diesem Temperaturbereich 1500 - 50000 mPa•s. Ist sie wesentlich höher, ist die Applikation sehr schwierig. Ist sie wesentlich tiefer, ist der Klebstoff so dünnflüssig, so dass er bei der Applikation von der zu verklebenden Werkstoffoberfläche ablaufen kann, bevor er sich aufgrund des Abkühlens verfestigt. Insbesondere liegt die Viskosität, bestimmt nach Brookfield Thermosel, im Temperaturbereich von 150 bis 180 °C bevorzugt im Bereich von 2500 - 20000 mPa•s.

Das in Folge des Abkühlens erfolgende Erstarren und Verfestigen des Klebstoffes bewirkt einen schnellen Festigkeitsaufbau und eine hohe Anfangshaftfestigkeit des Klebverbundes. Daher ist bei der Verarbeitung eines Klebstoffes darauf zu achten, dass das Verkleben innerhalb der Zeit erfolgt, in der der Klebstoff noch nicht zu stark abgekühlt ist, d.h. das Verkleben muss erfolgen, so lange der Klebstoff noch flüssig, bzw. zumindest noch klebrig und verformbar, ist.

Es hat sich gezeigt, dass die beschriebenen erfindungsgemässen Schmelzklebstoff-Zusammensetzungen eine hohe Anfangsfestigkeit aufweisen und in einem weiten Temperaturbereich über hohe Festigkeiten und Flexibilitäten sowie über eine sehr hohe UV-Stabilität verfügen.

Die beschriebenen erfindungsgemässen Schmelzklebstoff-Zusammensetzungen sind durch die Vermeidung von Isocyanaten aus Gründen der Arbeitshygiene und Arbeitssicherheit besonders vorteilhaft.

Zudem wurde gefunden, dass durch das bei 25 °C flüssige Polyolefin-Harz **PH,** im Vergleich zu Weichharzen eine verbesserte UV-Beständigkeit erzielt wird. Schließlich hat die Verwendung von Styrol-Blockcopolymeren **B** in der Zusammensetzung eine verbesserte Temperaturfestigkeit der Klebstoffe zur Folge.

Die erfindungsgemäßen Schmelzklebstoffzusammensetzungen weisen ein äusserst günstiges Haftspektrum auf unpolaren Kunststoffen, wie Polyethylen oder Polypropylen, auf, und erlauben so ein Verkleben auch ohne vorheriges Aufbringen eines Primers.

Es hat sich zudem gezeigt, dass die beschriebenen Schmelzklebstoff-Zusammensetzungen sehr lagerstabil sind, über gute Verarbeitungseigenschaften, insbesondere im Applikationstemperaturbereich von 150 bis 200 °C, verfügen und bei diesen Temperaturen auch über längere Zeit viskositätsstabil sind. Die Aushärtung erfolgt geruchsfrei, schnell und auch bei dickschichtigen Anwendungen ohne Blasen. Die Schmelzklebstoff-Zusammensetzung besitzt eine gute Haftung, insbesondere eine starke Soforthaftung und Klebrigkeit, und eine gute Beständigkeit gegenüber UV-Licht, Umwelteinflüssen, insbesondere gegenüber wässrigen Medien wie beispielsweise Tensiden, schwache Säuren und Laugen, und ist nicht korrosiv.

Weiter sind die beschriebenen erfindungsgemässen Schmelzklebstoff-Zusammensetzungen durch ihre Alterungs- und Wärmebeständigkeit besonders vorteilhaft.

Die vorgängig beschriebenen Schmelzklebstoff-Zusammensetzungen können vielseitig eingesetzt werden, typischerweise in der Bau- und der Hygieneindustrie.

Es hat sich gezeigt, dass die vorgängig beschriebenen Schmelzklebstoff-Zusammensetzungen bestens zum Verkleben von Polyolefin-Materialien mit Schäumen, Faserwerkstoffen oder Folien sowie zur Herstellung einer mehrschichtigen Kunststoffbahn verwendet werden können.

Weiterhin sind die Schmelzklebstoff-Zusammensetzungen auch sehr gut geeignet, um Sandwich-Panels zu kleben.

Ein weiterer Aspekt der Erfindung betrifft einen Verbundkörper, aufweisend ein erstes Substrat **S1,** welches bevorzugt eine Polymer-Folie und insbesondere eine Polyolefin-Folie ist, eine vorgängig beschriebene Schmelzklebstoff-Zusammensetzung, sowie ein zweites Substrat **S2,** welches bevorzugt ein Polyolefin-Schaumstoff oder ein Polyolefin-Faserwerkstoff ist, wobei die Schmelzklebstoff-Zusammensetzung zwischen erstem Substrat **S1** und zweitem Substrat **S2** angeordnet ist.

Geeignete Polymer-Folien beruhen z.B. auf Polyvinylchlorid (PVC) oder Acrylonitril/Budadien/Styrol (ABS) Copolymeren.

Als "Polymer-Folie" werden insbesondere biegsame flächige Polyolefine in einer Dicke von 0,05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Besonders bevorzugt weisen die Polyolefin-Folien eine Dicke von 0.5 - 2 mm, am meisten bevorzugt eine Dicke von 0.7 - 1.5 mm auf. Derartige Polymer-Folien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass Polyolefin-Folien auch noch andere Zusatzstoffe und Verarbeitungsmittel, wie Füllstoffe, Hitzestabilisatoren, Weichmacher, Gleitmittel, Biozide, Flammschutzmittel, Antioxidantien, Pigmente, wie z. B. Titandioxid oder Russ, und Farbstoffe enthalten können. Das heisst, es werden auch derartige Folien als Polyolefin-Folien bezeichnet, welche nicht zu 100 % aus Polyolefinen bestehen.

Der Begriff "Polyolefin-Folie" umfasst im Rahmen der vorliegenden Erfindung nicht nur Basismaterialien (d.h. Polymere in der Polyolefin-Folie; diese kann zusätzlich z.B. Füllstoffe enthalten, die nicht dem "Basismaterial" zuzurechnen sind), die ausschließlich aus α-Olefin- Monomeren aufgebaut sind, sondern erfasst auch Materialien, die neben a-Olefinmonomeren auch andere Monomere enthalten. Solche zusätzlichen Monomere können beispielsweise in Form von Vinylcarboxylatestern wie Vinylacetat oder Vinylpropionat oder (Meth)acylatestern wie Ethyl(meth)acrylat oder Propyl(meth)acylat vorliegen. Als besonders geeignetes Comonomer für solche Materialen hat sich Vinylacetat erwiesen, das, bevorzugt in Kombination mit Ethylen (unter Bindung von EVA-Copolymeren), ein vorteilhaftes Basismaterial für Polyolefin-Folien bildet.

Enhält das Basismaterial der "Polyolefin-Folie" ein Comonomer, das selbst kein α-Olefin ist, so es es dennoch bevorzugt, wenn der Massenanteil der nicht-α-Olefin Monomere geringer ist als der der α-Olefin Monomere. Besonders bevorzugte Massenanteile von nicht-α-Olefin Monomeren im Basismaterial der Polyolefin-Folie können mit bis zu 30 Gew.-% und insbesondere 5 bis 20 Gew.-% angegeben werden.

Das zweite Substrat **S2,** vielfach auch als Träger bezeichnet, kann von verschiedener Art und Natur sein. Die Substrate können beispielsweise aus Kunststoffen, insbesondere Polyolefinen oder ABS, Metall, lackiertem Metall, aus Kunststoff, Holz, Holzwerkstoffen oder Fasermaterialien sein. Das Substrat ist vorzugsweise ein fester, geformter Körper.

Insbesondere handelt es sich beim ersten Substrat **S1** um eine Polyolefin-Folie und beim zweiten Substrat **S2** um ein poröses Material, insbesondere einen Polyolefin-Schaumstoff oder einen Polyolefin-Faserwerkstoff.

Bei Bedarf kann die Oberfläche des zweiten Substrates **S2** vorbehandelt sein. Insbesondere kann eine derartige Vorbehandlung ein Reinigen oder ein Auftragen eines Primers darstellen. Bevorzugt ist jedoch das Aufbringen von Primern nicht erforderlich.

Der beschriebene Verbundkörper ist vorzugsweise ein Artikel der industriellen Fertigung, insbesondere ein Artikel zur Abdichtung von Untergründen oder Bauten gegen Wasserdurchstoss in der Baubranche wie beispielsweise wasserdichte Membranen.

Insbesondere bevorzugt ist der beschriebene Verbundkörper eine wasserdichte Membran, wobei es sich beim ersten Substrat **S1** um eine Polyolefin-Folie und beim zweiten Substrat **S2** um ein poröses Material, insbesondere einen Schaumstoff oder einen Faserwerkstoff handelt.

Im verbauten Zustand ist also bei einem solchen Verbundkörper typischerweise an der vom ersten Substrat **S1** abgewandten Seite des zweiten Substrats **S2** Beton angeordnet.

Falls es sich bei dem Verbundkörper um eine wasserdichte Membran handelt, weist das erste Substrat **S1** typischerweise eine hohe Beständigkeit gegen Wasserdruck auf und zeigt gute Werte in Weiterreissversuchen und Perforationsversuchen, was besonders bei mechanischen Belastungen auf Baustellen von Vorteil ist.

Eine poröse Struktur des zweiten Substrats **S2** ist der Elastizität der wasserdichten Membran zuträglich, sie kann dadurch besser Zug- und Scherkräfte aushalten. Andererseits führt sie zu einer guten Aufnahme von flüssigem Beton und somit zu einem guten Verbund mit dem flüssigen sowie dem ausgehärteten Beton. Dies kann insbesondere bei grossen Flächenneigungswinkeln von Vorteil sein, damit der Beton nicht auf dem zweiten Substrat **S2** abrutscht.

Vorzugsweise ist das zweite Substrat **S2** ein Faserwerkstoff. Unter Faserwerkstoff ist im ganzen vorliegenden Dokument ein Werkstoff zu verstehen, welcher aus Fasern aufgebaut ist. Die Fasern umfassen oder bestehen aus organischem oder synthetischem Material. Insbesondere handelt es sich um Zellulose-, Baumwollfasern, Proteinfasern oder um synthetische Fasern. Als synthetische Fasern sind vor allem bevorzugt Fasern aus Polyester oder aus einem Homo- oder Copolymeren von Ethylen und/ oder Propylen oder aus Viskose zu nennen. Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden.

Weiterhin umfasst der Faserwerkstoff Zwischenräume. Diese Zwischenräume werden durch geeignete Herstellverfahren aufgebaut. Vorzugsweise sind die Zwischenräume zumindest teilweise offen und erlauben das Eindringen von flüssigem Beton und/ oder von der vorhergehend genannten Schmelzklebstoff-Zusammensetzung.

Der aus Fasern aufgebaute Körper kann auf die verschiedensten dem Fachmann bekannten Verfahren hergestellt werden. Insbesondere kommen Körper zum Einsatz, die ein Gewebe, Gelege oder Gewirke sind.

Der Faserwerkstoff kann ein lockereres Material aus Spinnfasern oder Filamenten sein, deren Zusammenhalt im Allgemeinen durch die den Fasern eigene Haftung gegeben ist. Hierbei können die Einzelfasern eine Vorzugsrichtung aufweisen oder ungerichtet sein. Der aus Fasern aufgebaute Körper kann mechanisch verfestigt werden durch Vernadeln, Vermaschen oder durch Verwirbeln mittels scharfer Wasserstrahlen. Besonders bevorzugt als Faserwerkstoff ist ein Filz oder Vlies. Weiter bevorzugt sind Faserwerkstoffe, die eine Maschenzahl (oder Meshzahl) von 5-30 pro 10 cm aufweisen. Solche Schichten aus Faserwerkstoffen bieten dieselben Vorteile wie sie vorgehend für die porösen Materialien erwähnt wurden und haben geringe Herstellkosten. Weiter können Faserwerkstoffe in der Regel sehr gleichmässig hergestellt werden, wodurch eine vergleichbare Durchdringung mit Beton erreicht werden kann.

Vorteilhafterweise besteht das zweite Substrat **S2** aus einem thermoplastischen Material und das Material ist ausgewählt aus der Gruppe umfassend Polyethylen mit hoher Dichte (HDPE), Polyethylenterephthalat (PET), Polystyrol (PS), Polypropylen (PP), Polyvinylchlorid (PVC), Polyamid (PA) und Kombinationen davon.

Falls es sich bei dem Verbundkörper um eine wasserdichte Membran handelt, weist das zweite Substrat **S2** typischerweise eine Dicke von 0,1 - 1 mm, bevorzugt von 0,2-0,6 mm, insbesondere bevorzugt von 0,4-0,55 mm auf.

Die Schmelzklebstoff-Zusammensetzung ist zwischen erstem Substrat **S1** und dem zweiten Substrat **S2** angeordnet. Es kann jedoch auch von Vorteil sein, wenn die Schmelzklebstoff-Zusammensetzung teilweise oder vollständig, bevorzugt teilweise in das Substrat **S2** eindringt, woraus sich ein besserer Verbund mit der Schmelzklebstoff-Zusammensetzung ergibt.

Weiter kann es bei einem solchen Verbundkörper im verbauten Zustand für die Verbindung der wasserdichten Membran mit dem Beton vorteilhaft sein, wenn der Beton zumindest teilweise in Kontakt mit der Schmelzklebstoff-Zusammensetzung ist. Dies kann dadurch geschehen, dass der Beton das poröse Material durchsetzt und somit in Kontakt mit der Schmelzklebstoff-Zusammensetzung gelangt und/ oder dass die Schmelzklebstoff-Zusammensetzung das poröse Material durchsetzt und somit in Kontakt mit dem Beton gelangt.

Vorgehend genannte wasserdichte Membranen, umfassend die erfindungsgemässe Schmelzklebstoff-Zusammensetzung, sowie die Verwendung der erfindungsgemässen Schmelzklebstoff-Zusammensetzung in ebensolchen ist dahingehend vorteilhaft, dass einerseits die Schmelzklebstoff-Zusammensetzung die Verwendung von schwer zu verklebenden Polyolefin-Folien erlaubt, welche aufgrund ihrer hohe Beständigkeit gegen Wasserdruck äusserst vorteilhaft sind und sich durch eine hohe Beständigkeit gegenüber UV auszeichnen. Andererseits gewährleistet die Schmelzklebstoff-Zusammensetzung aufgrund ihrer Hydrophobizität und Widerstandsfähigkeit gegenüber Flüssigkeiten, der nicht-korrosiven Eigenschaften und der guten Haftungseigenschaften einen guten Verbund von erstem Substrat **S1** und zweitem Substrat **S2.** Dies verhindert beispielsweise Zwischenräume zwischen erstem Substrat **S1** und zweitem Substrat **S2** und erschwert das Hinterlaufen der wasserdichten Membran im Falle eines Lecks.

### Beispiele

**Tabelle 1. Charakterisierung der verwendeten Rohstoffe und deren Bezeichnung**

| | |
|---|---|
| ***P*** | Poly-α-olefin, Propen-reich |
| | Molekulargewicht (Mₙ): zwischen 17000 und 20000 g/mol |
| | Schmelzviskosität (190 °C DIN 53 019): ca. 50000 mPa•s |
| | Erweichungspunkt (Ring & Kugel, DIN EN 1238): 100 °C |
| | Dichte: ca. 0.85 g/cm³ |
| ***PH*** | Polyisobutylen (Mₙ ∼ 1050 g/mol; Flammpunkt (COC) = 210°C) |
| ***PW*** | Maleinsäureanhydridgepfropftes Polypropylen (durch Metallocen-Katalyse erhalten) |
| | Schmelzviskosität (170 °C DIN 53 018): ca. 800 mPa•s |
| | Dichte: ca. 0,91 g/cm³ |
| | Tropfpunkt: ca. 156 °C |
| ***B*** | SEBS-Blockcopolymer mit Schmelzflussindex von ca. 220 g/10Min (230°C, 2,16 kg) |
| ***Stab.*** | UV-Stabilisatorgemisch |

### Herstellung Testmembranen

Auf eine TPO-Membran einer Dicke von 1,2 mm (von Sika Schweiz) wurde ein Klebstoff **K1** mit 41,9 Gew.-% **P,** 32,6 Gew.-% **PH,** 19,4 Gew.-% **B,** 3,7 Gew.-% **PW** und 2,5 Gew.-% Stabilisatorgemisch mit einer Auftragsdicke von 200 g/m² aufgetragen. Auf den Klebstoffauftrag wurde anschliessend ein Vlies (Dicke von 0,5 mm, aus PP, Hersteller Polyvlies Frankreich, Produktname SC 61055001) einkaschiert.

Zum Vergleich wurden zwei entsprechende Membranen hergestellt, bei denen eine Mischung aus 47,5 Gew.-% **P,** 47,5 Gew.-% **PH,** 4,75 Gew.-% **PW** und 0,25 Gew.-% Stabilisator Irganox 1010 **(K2)** oder eine Mischung aus 47,5 Gew.-% **P,** 47,5 Gew.-% Wingtack 86, 4,75 Gew.-% **PW** und 0,25 Gew.-% Stabilisator Irganox 1010 **(K3)** als Klebstoff verwendet wurde.

### Probenvorbereitung

Die Probenvorbereitung erfolgte nach den Maßgaben der ASTM 285.

### Viskosität

Die Viskosität der Klebstoffe wurde mit einem Brookfield-Thermosel-System bei 180°C bestimmt und ist in mPas angegeben.

Die **Shore A Härte** wurde gemäß der ISO 868 bestimmt.

**Die SAFT (Shear adhesion failure Temperatur)** wurde gemäß ASTM D 4498 bestimmt.

Der **statische Ablauf** wurde mit Hilfe von Musterstreifen der Membranlaminate mit Dimensionen von 50 mm x 135 mm bestimmt. Diese wurden zunächst auf einem PP-natur Prüfkörper fixiert. Anschließend wurde das Vlies auf der einen Seite ca. 20 mm vom Klebstoff delaminiert und in diesem Bereich an einem Holzstreifen befestigt damit die einwirkende Zugkraft gleichmäßig über die Breite des Prüfkörpers verteilt wird. Für den Ablauftest werden die Muster im 45°-Winkel mit einm Belastungsgewicht von 50 g im Umlufttrockenschrank bei 80°C platziert. Zu Beginn der Messung und im Abstand von ca. 5 Min wird dann an der Ablösekante des Vlieses eine Markierung angebracht, um eine Auswertung nach Weg und Zeit vornehmen zu können. Die Ergebnisse dieser Messungen werden in cm/5 Min angegeben.

Der **dynamische Schälzug** wurde mit Hilfe von Musterstreifen der Membranlaminate mit Dimensionen von 25 mm x 215 mm bestimmt. Für den Zugversuch wurde das Vlies an einer seite ca. 15 mm vom Klebstoff delaminiert. Die Messung erfolgte mit der Zugprüfmaschine bei 25 °C. Für eine Bestimmung der UV-Beständigkeit wurden die Prüfstreifen vor der Messung für den angegebenen Zeitraum (4 Wochen) in einer Bewitterungstestanlage mit UV-Licht bestrahlt.

Die Ergebnisse der vorbeschriebenen Untersuchungen sind in der folgenden Tabelle 1 angegeben:

**Tabelle 1:**

| | **K1** | **K2** | **K3** |
|---|---|---|---|
| Viskosität [mPas] | 16880 | 4250 | 3330 |
| Shore A | 17 | 3 | 3 |
| SAFT [°C] | 68,3 | 53 | 47,7 |
| Ablauf (statisch) [cm/5 min] | 0,1 | 4 | 10 |
| Schälzug (dynamisch) [N/5 Min] | | | |
| Keine UV Belichtung | 27,3 | 16 | 10,5 |
| 4 Wochen UV Belichtung | 4,1 | 1,1 | 13,1 |

Die Ergebnisse zeigen, dass die Eigenschaften der Härte, der SAFT und des Ablaufs durch den Zusatz von Styrol-Blockcopolymeren signifikant verbessert werden können, ohne dass die Viskosität so stark ansteigt, dass sie die Verarbeitbarkeit des Klebstoffs wesentlich beeinträchtigt. Die Klebstoffe sind daher insbesondere für Anwendungen geeignet, bei denen die Produkte temporär hohen Temperaturen ausgesetzt sind, beispielsweise für Einsätze in den Golfstaaten.

## Patentansprüche

1. Schmelzklebstoff-Zusammensetzung umfassend:
**a)** mindestens ein bei 25 °C festes Polyolefin-Polymer **P,**
**b)** mindestens ein bei 25 °C flüssiges Polyolefin-Harz **PH,**
**c)** gegebenenfalls mindestens ein Polyolefin-Wachs **PW,** und
**d)** mindestens ein bei 25 °C festes Styrol-Blockcopolymer **B, dadurch gekennzeichnet, dass** das Polyolefin-Polymer **P** ein thermoplastisches Poly-α-Olefin ist.

2. Schmelzklebstoff-Zusammensetzung gemäß Anspruch 1, **dadurch gekennzeichnet, dass** das Polyolefin-Polymer **P** ein ataktisches Poly-α-Olefin (APAO), bevorzugt ein Propen-reiches Poly-α-Olefin ist.

3. Schmelzklebstoff-Zusammensetzung gemäß Anspruch 1 oder 2, **dadurch gekennzeichnet, dass** das Polyolefin-Polymer **P** einen Erweichungspunkt gemessen nach der Ring & Kugel-Methode gemäß DIN EN 1238, zwischen 70 °C und 170 °C, bevorzugt zwischen 80 °C und 120 °C und besonders bevorzugt zwischen 90 °C und 110 °C, aufweist.

4. Schmelzklebstoff-Zusammensetzung gemäß einem der vorhergehenden Ansprüche, **dadurch gekennzeichnet, dass** die Menge des mindestens einen bei 25 °C festen Polyolefin-Polymers **P** 10 bis 60 Gew.-%, bevorzugt 25 bis 55 Gew.-% und besonders bevorzugt 30 bis 50 Gew.-%, bezogen auf die Schmelzklebstoff-Zusammensetzung, beträgt.

5. Schmelzklebstoff-Zusammensetzung gemäß einem der vorhergehenden Ansprüche, **dadurch gekennzeichnet, dass** das mindestens eine bei 25 °C flüssige Polyolefin-Harz **PH** ein Polyisobutylen-Harz ist.

6. Schmelzklebstoff-Zusammensetzung gemäß einem der vorhergehenden Ansprüche, **dadurch gekennzeichnet, dass** die Menge des mindestens einen Polyolefin-Harz **PH** mindestens 20 Gew.-%, bevorzugt 25 bis 45 Gew.-% und besonders bevorzugt 30 bis 40 Gew.-%, bezogen auf die Schmelzklebstoff-Zusammensetzung, beträgt.

7. Schmelzklebstoff-Zusammensetzung gemäß einem der vorhergehenden Ansprüche, **dadurch gekennzeichnet, dass** das mindestens eine Polyolefin-Wachs **PW** ein Maleinsäureanhydrid-gepfropftes Polyolefin-Wachs und bevorzugt ein Maleinsäureanhydrid-gepfropftes Polypropylen- oder Polyethylen-Wachs ist.

8. Schmelzklebstoff-Zusammensetzung gemäß einem der vorhergehenden Ansprüche, **dadurch gekennzeichnet, dass** die Menge des mindestens einen Polyolefin-Wachses **PW** mehr als 1 Gew.-%, bevorzugt 1 bis 20 Gew.-%, besonders bevorzugt 3 bis 15 Gew.-% und ganz besonders bevorzugt etwa 5 bis 10 Gew.-%, bezogen auf die Schmelzklebstoff-Zusammensetzung, beträgt.

9. Schmelzklebstoff-Zusammensetzung gemäß einem der vorhergehenden Ansprüche, **dadurch gekennzeichnet, dass** das bei 25°C festes Styrol-Blockcopolymer **B** ein SXS-Blockcopolymer umfasst, bei dem S einen Styrolblock und X einen elastischen α-Olefinblock, vorzugsweise einen elastischen Ethylen/Butylen-Block, bezeichnet.

10. Schmelzklebstoff-Zusammensetzung gemäß einem der vorhergehenden Ansprüche, **dadurch gekennzeichnet, dass** die Menge des mindestens einen bei 25°C festen Styrol-Blockcopolymers mehr als 10 Gew.-%, bevorzugt 15 bis 35 Gew.-% und besonders bevorzugt 20 bis 30 Gew.-%, bezogen auf die Schmelzklebstoffzusammensetzung beträgt.

11. Schmelzklebstoff-Zusammensetzung gemäß einem der vorhergehenden Ansprüche, **dadurch gekennzeichnet, dass** sie weitere Additive ausgewählt aus der Gruppe bestehend aus Füllstoffen, Weichmachern, Haftvermittlern, UV-Absorptionsmitteln, UV- und Wärmestabilisatoren, optische Aufheller, Pigmente, Farbstoffe und Trocknungsmittel, oder Gemischen davon, enthält.

12. Verwendung der Schmelzklebstoff-Zusammensetzung gemäß einem der vorhergehenden Ansprüche 1 bis 11 zur Herstellung einer mehrschichtigen Kunststoffbahn, zum Verkleben von Polyolefin-Materialien mit Schäumen, Faserwerkstoffen oder Folien.

13. Verbundkörper aufweisend
- ein erstes Substrat **S1,** welches eine Polymer-Folie ist;
- eine Schmelzklebstoff-Zusammensetzung gemäß den vorhergehenden Ansprüchen 1 bis 11, sowie
- ein zweites Substrat **S2,** welches bevorzugt ein Polyolefin-Schaumstoff oder ein Polyolefin-Faserwerkstoff ist,
wobei die Schmelzklebstoff-Zusammensetzung zwischen dem ersten Substrat **S1** und dem zweiten Substrat **S2** angeordnet ist.

14. Verbundkörper gemäß Anspruch 13, **dadurch gekennzeichnet, dass** an der vom ersten Substrat **S1** abgewandten Seite des zweiten Substrats **S2** Beton angeordnet ist.

15. Verbundkörper gemäß Anspruch 13 oder 14, **dadurch gekennzeichnet, dass** es sich bei dem zweiten Substrat **S2** um ein poröses Material handelt und dass der Beton zumindest teilweise in Kontakt mit der Schmelzklebstoff-Zusammensetzung ist.

## Claims

1. Hot-melt adhesive composition comprising:
**a)** at least one 25°C solid polyolefin polymer **P,**
**b)** at least one 25°C liquid polyolefin resin **PH,**
**c)** optionally at least one polyolefin wax **PW,** and
**d)** at least one 25°C solid styrene block copolymer **B, characterized in that** the polyolefin polymer **P** is a thermoplastic poly-α-olefin.

2. Hot-melt adhesive composition according to Claim 1, **characterized in that** the polyolefin polymer **P** is an atactic poly-α-olefin (APAO), preferably a propene-rich poly-α-olefin.

3. Hot-melt adhesive composition according to Claim 1 or 2, **characterized in that** the polyolefin polymer **P** has a softening point, as measured by the ring-and-ball method of DIN EN 1238, between 70°C and 170°C, preferably between 80°C and 120°C and more preferably between 90°C and 110°C.

4. Hot-melt adhesive composition according to any preceding claim, **characterized in that** the amount of the at least one 25°C solid polyolefin polymer **P** is from 10 to 60 wt%, preferably from 25 to 55 wt% and more preferably from 30 to 50 wt%, based on the hot-melt adhesive composition.

5. Hot-melt adhesive composition according to any preceding claim, **characterized in that** the at least one 25°C liquid polyolefin resin **PH** is a polyisobutylene resin.

6. Hot-melt adhesive composition according to any preceding claim, **characterized in that** the amount of the at least one polyolefin resin **PH** is not less than 20 wt%, preferably from 25 to 45 wt% and more preferably from 30 to 40 wt%, based on the hot-melt adhesive composition.

7. Hot-melt adhesive composition according to any preceding claim, **characterized in that** the at least one polyolefin wax **PW** is a maleic anhydride-grafted polyolefin wax and preferably a maleic anhydride-grafted polypropylene or polyethylene wax.

8. Hot-melt adhesive composition according to any preceding claim, **characterized in that** the amount of the at least one polyolefin wax **PW** is more than 1 wt%, preferably from 1 to 20 wt%, more preferably from 3 to 15 wt% and most preferably about 5 to 10 wt%, based on the hot-melt adhesive composition.

9. Hot-melt adhesive composition according to any preceding claim, **characterized in that** the 25°C solid styrene block copolymer **B** comprises an SXS block copolymer wherein S denotes a styrene block and X denotes an elastic α-olefin block, preferably an elastic ethylene-butylene block.

10. Hot-melt adhesive composition according to any preceding claim, **characterized in that** the amount of the at least one 25°C solid styrene block copolymer is more than 10 wt%, preferably from 15 to 35 wt% and more preferably from 20 to 30 wt%, based on the hot-melt adhesive composition.

11. Hot-melt adhesive composition according to any preceding claim, **characterized in that** it contains further additives selected from the group consisting of fillers, plasticizers, adhesion promoters, UV absorbers, UV and heat stabilizers, optical brighteners, pigments, dyes and driers, or mixtures thereof.

12. Use of the hot-melt adhesive composition according to any of the preceding Claims 1 to 11 in the manufacture of a multilayered polymeric sheeting and for adhesively bonding polyolefin materials to foams, fibrous materials or sheets.

13. Composited bodies comprising
- a first substrate **S1** which is a polymer sheet;
- a hot-melt adhesive composition according to the preceding Claims 1 to 11, and also
- a second substrate **S2** which is preferably a polyolefin foam or a fibrous polyolefin material,
wherein the hot-melt adhesive composition is arranged between the first substrate **S1** and the second substrate **S2.**

14. Composited body according to Claim 13, **characterized in that** concrete is arranged on that side of the second substrate **S2** which faces away from the first substrate **S1.**

15. Composited body according to Claim 13 or 14, **characterized in that** the second substrate **S2** comprises a porous material and **in that** the concrete is at least partially in contact with the hot-melt adhesive composition.

## Revendications

1. Composition d'adhésif thermofusible, comprenant :
a) au moins un polymère de polyoléfine solide à 25 °C **P,**
b) au moins une résine de polyoléfine liquide à 25 °C **PH,**
c) éventuellement au moins une cire de polyoléfine **PW,** et
d) au moins un copolymère séquencé de styrène solide à 25 °C **B, caractérisée en ce que** le polymère de polyoléfine **P** est une poly-α-oléfine thermoplastique.

2. Composition d'adhésif thermofusible selon la revendication 1, **caractérisée en ce que** le polymère de polyoléfine **P** est une poly-α-oléfine atactique (APAO), de préférence une poly-α-oléfine riche en propène.

3. Composition d'adhésif thermofusible selon la revendication 1 ou 2, **caractérisée en ce que** le polymère de polyoléfine **P** présente un point de ramollissement, mesuré par la méthode à anneau et bille selon DIN EN 1238, compris entre 70 °C et 170 °C, de préférence entre 80 °C et 120 °C, et de manière particulièrement préférée entre 90 °C et 110 °C.

4. Composition d'adhésif thermofusible selon l'une quelconque des revendications précédentes, **caractérisée en ce que** la quantité dudit au moins un polymère de polyoléfine solide à 25 °C **P** est de 10 à 60 % en poids, de préférence de 25 à 55 % en poids et de manière particulièrement préférée de 30 à 50 % en poids, par rapport à la composition d'adhésif thermofusible.

5. Composition d'adhésif thermofusible selon l'une quelconque des revendications précédentes, **caractérisée en ce que** ladite au moins une résine de polyoléfine liquide à 25 °C **PH** est une résine de polyisobutylène.

6. Composition d'adhésif thermofusible selon l'une quelconque des revendications précédentes, **caractérisée en ce que** la quantité de ladite au moins une résine de polyoléfine **PH** est d'au moins 20 % en poids, de préférence de 25 à 45 % en poids et de manière particulièrement préférée de 30 à 40 % en poids, par rapport à la composition d'adhésif thermofusible.

7. Composition d'adhésif thermofusible selon l'une quelconque des revendications précédentes, **caractérisée en ce que** ladite au moins une cire de polyoléfine **PW** est une cire de polyoléfine greffée avec de l'anhydride de l'acide maléique et de préférence une cire de polypropylène ou de polyéthylène greffée avec de l'anhydride de l'acide maléique.

8. Composition d'adhésif thermofusible selon l'une quelconque des revendications précédentes, **caractérisée en ce que** la quantité de ladite au moins une cire de polyoléfine **PW** est supérieure à 1 % en poids, de préférence de 1 à 20 % en poids, de manière particulièrement préférée de 3 à 15 % en poids, et de manière tout particulièrement préférée d'environ 5 à 10 % en poids, par rapport à la composition d'adhésif thermofusible.

9. Composition d'adhésif thermofusible selon l'une quelconque des revendications précédentes, **caractérisée en ce que** le copolymère séquencé de styrène solide à 25 °C **B** comprend un copolymère séquencé SXS, dans lequel S désigne une séquence styrène et X désigne une séquence α-oléfine élastique, de préférence une séquence éthylène/butylène élastique.

10. Composition d'adhésif thermofusible selon l'une quelconque des revendications précédentes, **caractérisée en ce que** la quantité dudit au moins un copolymère séquencé de styrène solide à 25 °C est supérieure à 10 % en poids, de préférence de 15 à 35 % en poids et de manière particulièrement préférée de 20 à 30 % en poids, par rapport à la composition d'adhésif thermofusible.

11. Composition d'adhésif thermofusible selon l'une quelconque des revendications précédentes, **caractérisée en ce qu'**elle contient d'autres additifs choisis dans le groupe constitué par les charges, les plastifiants, les promoteurs d'adhésion, les agents d'absorption UV, les stabilisateurs UV et thermiques, les azurants optiques, les pigments, les colorants et les agents siccatifs, ou leurs mélanges.

12. Utilisation de la composition d'adhésif thermofusible selon l'une quelconque des revendications 1 à 11 précédentes pour la fabrication d'une bande en matière plastique multicouche, pour le collage de matériaux polyoléfiniques avec des mousses, des matériaux fibreux ou des films.

13. Corps composite, comprenant :
- un premier substrat **S1,** qui est un film polymère ;
- une composition d'adhésif thermofusible selon les revendications 1 à 11 précédentes, et
- un deuxième substrat **S2,** qui est de préférence une mousse de polyoléfine ou un matériau fibreux de polyoléfine,
la composition d'adhésif thermofusible étant agencée entre le premier substrat **S1** et le deuxième substrat **S2.**

14. Corps composite selon la revendication 13, **caractérisé en ce que** du béton est agencé sur le côté opposé au premier substrat **S1** du deuxième substrat **S2.**

15. Corps composite selon la revendication 13 ou 14, **caractérisé en ce que** le deuxième substrat **S2** est un matériau poreux et **en ce que** le béton est au moins partiellement en contact avec la composition d'adhésif thermofusible.
